# EUROPEAN PATENT APPLICATION

(11) **EP 2 077 391 A1**
(43) Date of publication of application: **08.07.2009**
(21) Application number: 08394002.3
(22) Date of filing: 03.01.2008
(51) Int. Cl.: F03B 13/18, F04B 17/00

(54) **Pumping power generator**

(71) Applicant: Molloy, Padraig, Co. Galway (IE)
(72) Inventor: Molloy, Padraig, Co. Galway (IE)
(74) Representative: Lucey, Michael

(57) **Abstract**

A system for converting wave energy of a body of water to a pressurised flow of fluid comprises a fluid pump assembly adapted to lie beneath a surface of the body of water, the assembly having a plurality of fluid pumps spaced along and in fluid communication with a conduit for the fluid. Each fluid pump comprises a pumping float adapted to sit on or adjacent to and move with a surface of the body of water such wave-induced vertical movement of the float actuates the pump, wherein wave motion on the surface is converted a pumping action to generate a pressurised flow of fluid within the conduit. The fluid pump generally comprises a piston pump having a piston mounted within cylinder and operatively connected to the pumping float for movement therewith, wherein the piston pump comprises directional flow valves to ensure that movement of the piston within the cylinder pumps fluid into the conduit. The fluid pump assembly has a slight negative buoyancy, and comprises a plurality of positioning floats which are adapted to resist vertical movement of the fluid pump assembly. The fluid pump assembly may also comprise an inertia amplifier adapted to minimise vertical movement of the assembly due to the pumping action of the pistons.

## Description

### Introduction

The invention relates to a system for converting wave energy of a body of water to a pressurised flow of fluid. In particular, the invention relates to an electricity generation system.

### Statement of Invention

A system for converting wave energy of a body of water to a pressurised flow of fluid comprising a fluid pump assembly adapted to lie beneath a surface of the body of water, the assembly having a plurality of fluid pumps spaced along and in fluid communication with a conduit for the fluid, each fluid pump comprising a pumping float adapted to sit on or adjacent to and move with a surface of the body of water such wave-induced vertical movement of the float actuates the pump, wherein wave motion on the surface is converted a pumping action to generate a pressurised flow of fluid within the conduit.

Thus, relative movement between the pumping float and the fluid pump generates a pumping action which generates a pressurised flow of fluid within the conduit. This pressurised flow of fluid may be used for a variety of purposes but it is primarily intended to be employed as a power source. The body is water will generally be the sea, however it is envisaged that the system may be operable in other bodies of water such as lakes and reservoirs. Typically, fluid in the system is water, however other fluids may be employed.

Various types of pumps may be employed that are capable of converting relative movement between the pumping floats and the pump to generate a pumping action, the details of which will be well known to those skilled in the art. One particularly preferred fluid pump is a piston pump. Suitably, the piston pump comprises a piston mounted within a cylinder and operatively connected to the pumping float for movement therewith. Ideally, the piston pump comprises directional flow valve means to ensure that movement of the piston within the cylinder pumps fluid into the conduit. In one embodiment, the directional flow valve means comprises one or more valves mounted in the top of the piston and adapted to open in response to downward motion of the piston and close in response to upward movement of the piston. Typically, directional flow valve means also includes one or more valves mounted in the top of the cylinder and adapted to open in response to upward motion of the piston and close in response to downward movement of the piston.

The fluid pump assembly typically has a slight negative buoyancy such that it will lie beneath a surface of the water, and ideally comprises a plurality of positioning floats which are adapted to resist vertical movement of the fluid pump assembly. Thus, the fluid pump assembly and position floats are designed to provide stable displacement and resistance to deflection or rising of the assembly under applied loads generated by pumping action of the floats. Thus, as the sea moves up and down due to wave motion, the fluid pump assembly will resist vertical movement, and this increases the level of relative movement between the fluid pumps and the pumping floats as the floats rise and fall due to wave motion. Ideally, the positioning floats are low displacement buoyancy floats.

In a preferred embodiment of the invention, the system comprises an inertia amplifier adapted to minimise vertical movement of the assembly due to the pumping action of the pistons. In one embodiment, the inertia amplifier comprises plate disposed on the fluid pump assembly substantially parallel to a surface of the body of fluid. Typically, the plate will have a relatively large surface area to thereby provide a resistance to vertical movement in the water. Suitably, the plate comprises a plurality of valve means mounted therein, the valve means being designed to open on downward movement of the assembly and close in response to upward movement of the assembly.

Preferably, each piston is connected to the pumping float by connecting means, wherein the plurality of connecting means are interconnected by means of a bridle system. The purpose of the bridle system is to prevent lateral movement of the pumping floats with respect of the fluid pump assembly, as such movement could damage the connecting means and introduce bending moments and induce tensile and shear stresses and strains on the system.

Ideally, the system includes means for anchoring the system to an anchor point such that the fluid pump assembly is movable in response to the wave direction of travel.

In one embodiment of the invention, the stroke length of the piston pumps is chosen such that it approximately matches the wave height of the body of water where the system is intended to be placed.

In a preferred embodiment of the invention, the fluid pump assembly is provided as a modular system comprising a plurality of modular units adapted to interconnect, each modular unit comprising a section of conduit in fluid communication with at least one fluid pump. Suitably, each modular unit comprises a pumping float for the at least one fluid pump. Ideally, each modular unit comprises a positioning float. Typically, the modular units are adapted to interconnect with a degree of flexibility to allow the modular system flex along its length.

The invention also relates to a modular unit for a system according to the invention and comprising a length of conduit adapted at each end to interconnect with another modular unit and having a fluid pump in fluid communication with the conduit such that actuation of the fluid pump causes fluid to be pumped into the conduit. Suitably, the modular unit comprises a pumping float ideally adapted to float on (or adjacent to) a surface of a body of water, the float being operatively connected to the fluid pump for actuation thereof in response to wave-induced vertical movement of the pumping float. Typically, the modular unit comprises a positioning float ideally having a low displacement. In a preferred embodiment, the modular unit comprises an inertia amplifying plate disposed generally parallel to the surface of the body of water.

The invention also relates to an electricity generation system comprising a system according to the invention. Suitably, the electricity generation system comprises a turbine mounted within the system for converting the pressurised flow of fluid within the conduit to electricity. In one embodiment the turbine is mounted within, and ideally towards one end of, the conduit. However, the turbine may be mounted on the sea bed, or the land, or an a vessel positioned close to the fluid pump assembly, with fluid communication being provide between the conduit and the turbine with suitable conduit means.

In one embodiment, the system comprises a closed fluid system in which the fluid pumped in the conduit is returned through a closed loop system to the fluid pumps.

The invention also relates to a method of generating electricity comprising a step of positioning a system according to the invention is a body of water, and converting the pressurised flow of fluid into electricity.

Thus, the invention relates to an integrated system for the conversion of wave energy to a pressurised flow of water that can then be converted to electrical energy or to other uses. The device suitably consists of modular sequence of piston pumps spaced along a hollow tubular member whose longitudinal axis is typically aligned with wave direction of travel. The pistons vertical upward motion through the cylinder is in one embodiment achieved by a driving system consisting of a buoy floating on the surface of the water and a cable/connecting rod assembly linking the oscillating float directly with the piston. As the piston moves upwards is creates a positive pressure in front of it which lifts open a simple valve/flap, directional flow valve, and allows the displaced water flow into the horizontal cylinder/pipe. When the wave recedes the float drops and lowers the piston, whose density is significantly above that of water and whose mass causes it to drop rapidly in the cylinder, thereby creating a negative pressure in the cylinder above it - this acts to close the valve in the pipe and open a similar directional flow valve in the piston face allowing water to flow through the piston and into the chamber. In summary the system typically consists of two directional flow valves and a piston/cylinder system that transfers wave motion on the surface into a cyclical pumping motion beneath the sea surface.

In order for the relative motion between piston and cylinder to be optimized the cylinder ideally lies a fixed distance beneath the surface. In one embodiment, this is achieved by giving the tube/cylinder assembly a slightly negative buoyancy and then supporting it in the water by using a number of low displacement buoyancy floats. As these floats can submerge the device depth will not vary significantly under wave action. In order that the piston and tube component of the device is not forced towards the surface under the action of the pistons a large inertia amplifier is suitably attached to the underside of the device. This may take the shape of a large flat plate/surface which is mounted parallel to the sea surface. An array of flap type directional flow valves are ideally contained in the surface of the plate which facilitate upward flow through the plate and resist downward flow - under a given force the device will move down more quickly than it will rise. This inertia amplifier or unidirectional baffle system reduces the displacement effect on the device of piston upward force and ensures that the device then sits a fixed distance beneath the surface of the body of water.

### Brief Description of the Figures

The invention will be more clearly understood from the following description of some embodiments thereof, given by way of example only, with reference to the accompanying drawings in which:
FIG. 1 illustrates a number of views and an isometric projection of Embodiment 1 of a wave activated pumping system.
FIG. 2 illustrates a projection of Embodiment 1 of a wave activated pumping module..
FIG. 3 illustrates a number of views and an isometric projection of Embodiment 2 of a wave activated closed-loop pumping system.
FIG. 4 illustrates a projection of Embodiment 2 of a wave activated pumping system for power generation showing the mooring system and an embodiment of a bridle system for pumping floats.

### Detailed Description of the Invention

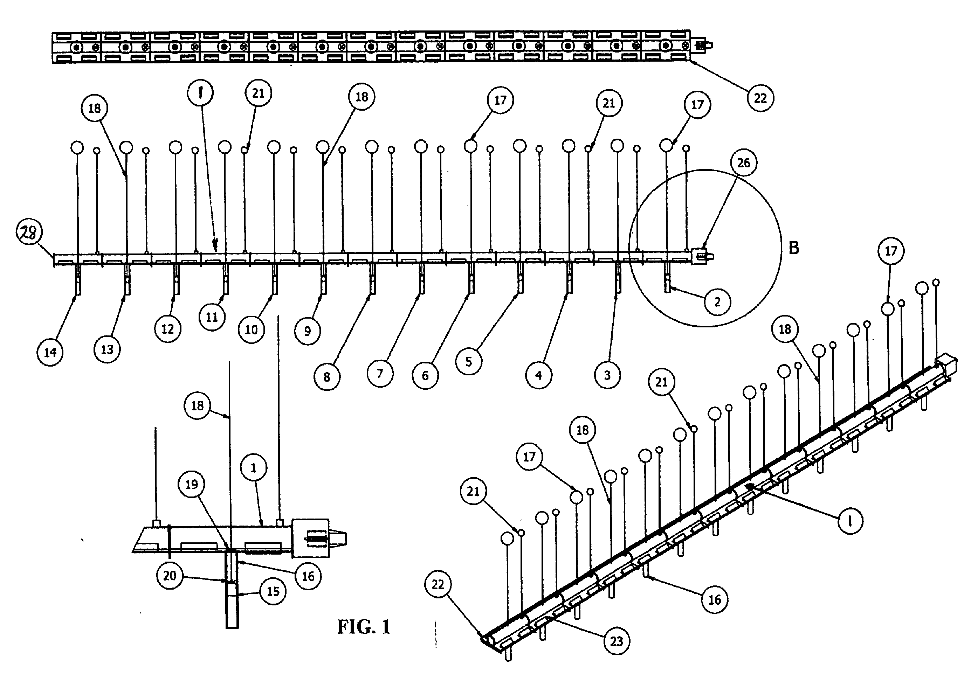

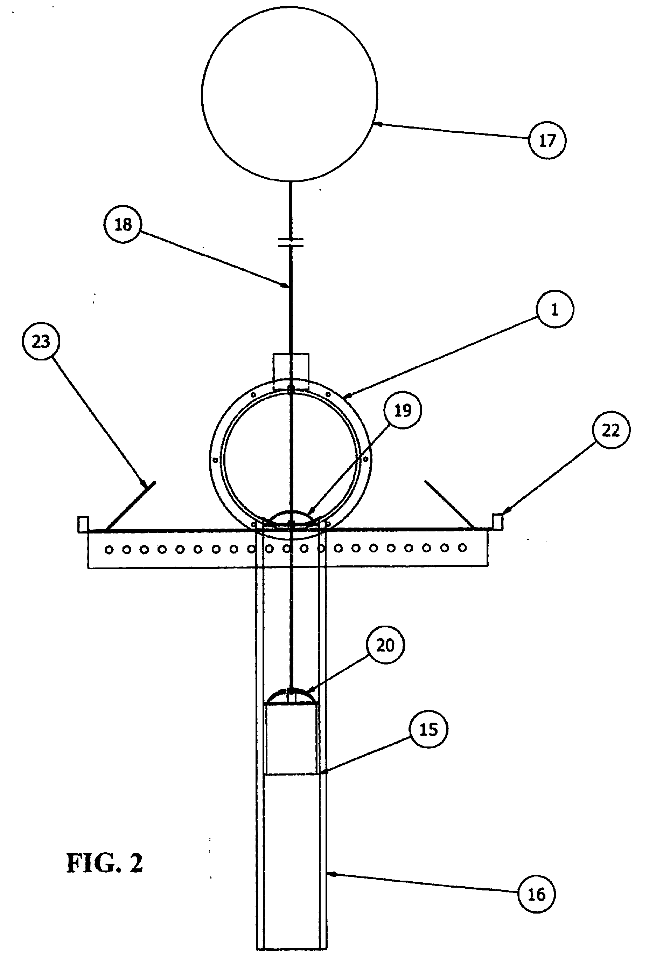

The device, as depicted in Fig. 1, consists of a horizontal conduit or pipe (1) held a fixed distance beneath the water's surface, whose longitudinal axis aligns with wave direction of travel, and into which a series of pistons pumps (2-14), operated by wave action, pump water. In the embodiment shown each piston pump and section of conduit exist as a module and the number of modules joined together may be varied, in Fig. 1 thirteen modules are shown connected. In the embodiment of the piston pump shown in Fig 2 the piston's (15) vertical upward motion through the cylinder (16) is achieved by a driving system consisting of a pumping float or buoy (17) floating on the surface of the water and a cable/connecting rod assembly (18) linking the oscillating float directly with the piston. As the wave lifts the pumping buoy the piston is lifted upwards and creates a positive pressure in front of it, thereby lifting open a simple valve/flap (19) which acts as a directional flow valve, and allows the displaced water flow out of the vertical cylinder (16) into the horizontal conduit (1). As the wave recedes the float drops and lowers the piston (15). The piston is made from a material with a density that is significantly above that of water, thereby creating a strong negative pressure above it in the cylinder when unsupported by the pumping buoy - this pressure differential between cylinder and conduit acts to close the valve to the conduit (19) and open a directional flow valve (20) in the piston top surface allowing water to flow up through the piston and into the cylinder as the piston drops. In summary the piston pump as described consists of two directional flow valves and a piston/cylinder system that transfers wave motion on the surface into a cyclical pumping motion beneath the sea surface.

In order for the relative motion between pistons and cylinder to be optimized for maximum pumping effect the cylinder must lie a consistent distance beneath the surface. This is achieved by designing the assembly of conduit and cylinders such that it has slightly negative buoyancy, (flotation tanks may be attached to the conduit to achieve this and/or materials of suitable density may be used). The conduit and cylinders assembly is supported in the water and prevented from sinking by using a number of low displacement buoyancy or positioning floats (21). As these positioning floats are of low displacement they can submerge as the wave crests pass. By using this system the depth of the conduit will not vary significantly under wave action. However in order that the conduit and cylinder assembly does not rise towards the surface under the upward forces generated by the pistons, a large inertia amplifier (22) is attached to the underside of the device. This may take the shape of a large flat plate/surface which is mounted on the conduit and which is oriented parallel to the sea surface. An array of flap type directional flow valves (23) are contained in the surface of the inertia amplifier plate thereby facilitating upward flow of water through the plate and resisting downward flow so that the cylinder/conduit assembly will sink more easily than it will rise. This inertia amplifier or unidirectional baffle system reduces the displacement effect on the device of piston upward force and ensures that the device then sits an adequately consistent distance beneath the water surface.

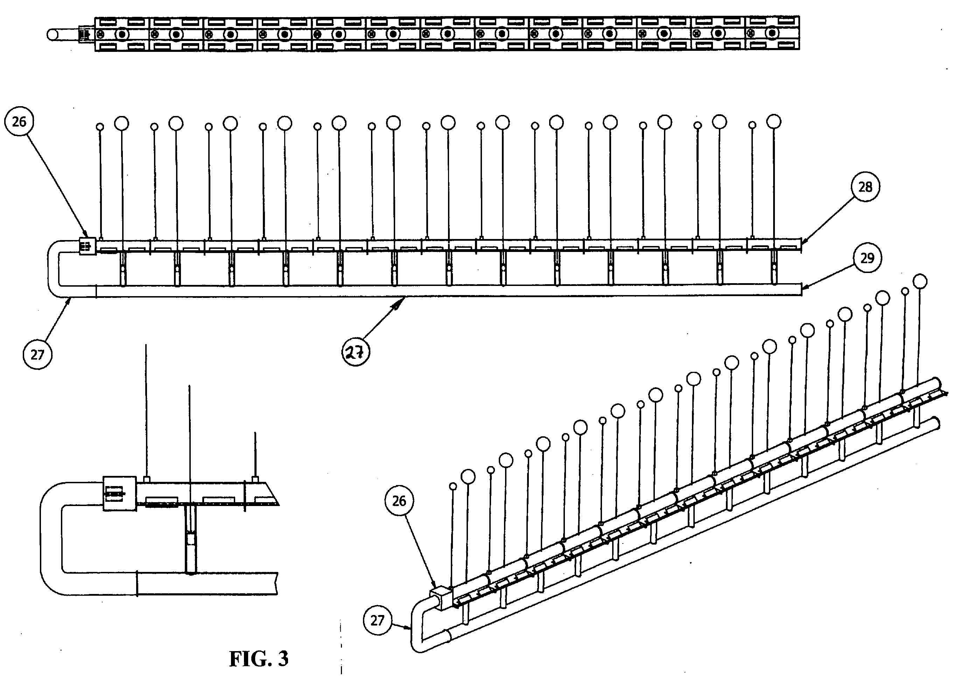

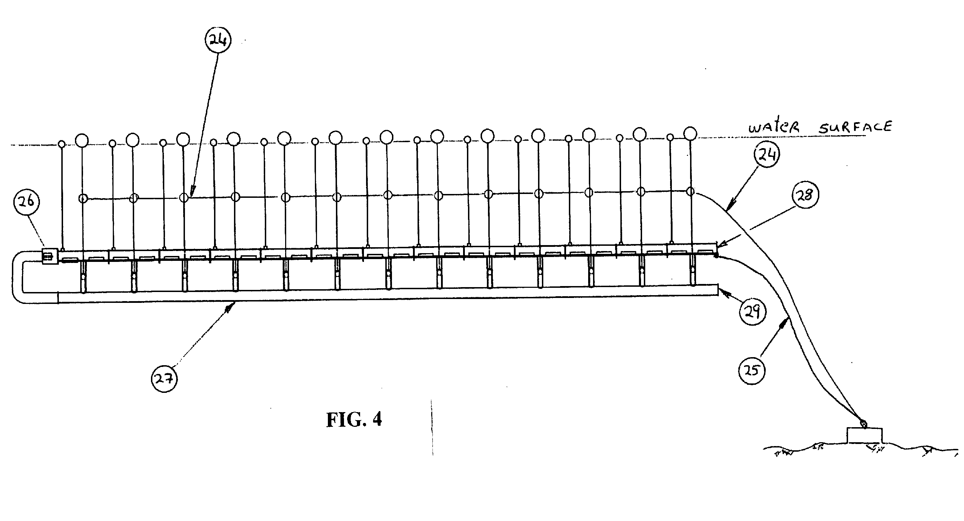

As the wave passes underneath the pumping floats (17) each piston pump (2-14) operates in sequence to force water into the conduit. In the embodiment shown, flow is in one direction only so the conduit is sealed at one end by a plate (28). The system as shown in Fig.3 and Fig. 4 has the conduit outlet/turbine (26) at the opposite end from the mooring system but the positions of outlet (turbine) and sealing plate (28) could be reversed. Alternatively both ends could be sealed and an outlet could be incorporated elsewhere along the conduits length.

As shown in Fig. 3 and Fig. 4 a higher-efficiency closed-loop flow system for the embodiment shown may be developed by returning flow directly to the bottom of each cylinder using the flow return conduit shown (27). This will improve flow rates and pressure differentials thereby improving device efficiency. An additional advantage obtained by recycling water through the device is that there is a large reduction in the volumes of waterborne debris and rubbish that will pass through the valves and turbine. In the embodiment shown water that is required to make up losses enters through a filter mesh or grid (29).

In the embodiment shown in Fig. 3 and Fig. 4 the flow of pressurized water from system is used to drive a submerged turbine (26) for the generation of electricity (27).

As shown in Fig 4 a bridle system (24) may be used on the pumping floats to reduce the horizontal component of load that they will impart to the cable/connecting rod assembly and thereby the piston. It will consist of a cable system that allows vertical movement of the floats but resists lateral forces caused by wave and wind action on the pumping floats. The bridle may be secured to the conduit (14) or as is shown here it may be secured directly to the mooring system (25).

Another embodiment replaces the direct drive between float (17) and piston (15) with a mechanism designed to modify piston stroke length and/or modify the force ratio the load exerted by the pumping float and the piston. Examples of this are using a system of pulleys on the cable connecting the float and piston or using a simple lever type linkage to alter the load ratio.

Another embodiment reverses the position of turbine and end plate with respect to the mooring system.

Another embodiment closes of both ends of the conduit and creates an outlet elsewhere along the conduit.

Another embodiment uses a conduit with a varying cross-sectional profile in order to reduce flow losses and optimize flow characteristics.

Another embodiment of the system uses the pumping device in conjunction with pressure amplifiers to increase pressure and reduce system flow.

Another embodiment combines the flow from a number of these pumping devices by feeding each device's output flow to a manifold and then using the combined flow to drive an electrical power generation system.

| **Description of Elements** | **No.** |
|---|---|
| Horizontal conduit or pipe | 1 |
| Sequence of piston pumps | 2 - 14 |
| Piston | 15 |
| Cylinder | 16 |
| Pumping float or buoy | 17 |
| Cable and connecting rod assembly | 18 |
| Cylinder outlet directional flow valve/flap | 19 |
| Piston inlet directional flow | 20 |
| Low displacement buoyancy or positioning floats | 21 |
| Inertia amplifier plate | 22 |
| Inertia amplifier directional flow valve/flap | 23 |
| Pumping float bridle system | 24 |
| Anchor/mooring system | 25 |
| Turbine | 26 |
| Return flow conduit | 27 |
| Conduit end sealing plate | 28 |
| Water inlet and filter grid | 29 |

The invention is not limited to the embodiment hereinbefore described which may be varied in construction and detail without departing from the spirit of invention.

## Claims

1. A system for converting wave energy of a body of water to a pressurised flow of fluid comprising a fluid pump assembly adapted to lie beneath a surface of the body of water, the assembly having a plurality of fluid pumps spaced along and in fluid communication with a conduit for the fluid, each fluid pump comprising a pumping float adapted to sit on or adjacent to and move with a surface of the body of water such wave-induced vertical movement of the float actuates the pump, wherein wave motion on the surface is converted a pumping action to generate a pressurised flow of fluid within the conduit.

2. A system as claimed in Claim 1 in which the fluid pump comprises a piston pump.

3. A system as claimed in Claim 2 in which the piston pump comprises a piston mounted within cylinder and operatively connected to the pumping float for movement therewith, wherein the piston pump comprises directional flow valves to ensure that movement of the piston within the cylinder pumps fluid into the conduit.

4. A system as claimed in Claim 1 in which the fluid pump assembly has a slight negative buoyancy, and comprises a plurality of positioning floats which are adapted to resist vertical movement of the fluid pump assembly.

5. A system as claimed in Claim 1, 2 or 3 in which the fluid pump assembly comprises an inertia amplifier adapted to miminise vertical movement of the assembly due to the pumping action of the pistons.

6. A system as claimed in Claim 8 in which the plate comprises a plurality of flap valves mounted therein, the flap valves being designed to open on downward movement of the assembly and close in response to upward movement of the assembly.

7. A system as claimed in any preceding Claim in which the fluid pump assembly is provided as a modular system comprising a plurality of modular units adapted to interconnect, each modular unit comprising a section of conduit in fluid communication with at least one fluid pump.

8. A system as claimed in Claim 12 in which each modular unit comprises a pumping float for the at least one fluid pump and/or at least one positioning float.

9. An electricity generation system comprising a system as claimed in any of Claims 1 to 8 and further including a turbine for converting the pressurised flow of fluid within the conduit to electricity.

10. A method of generating electricity comprising a step of positioning a system according to any of Claims 1 to 9 in the sea, and converting the pressurised flow of fluid into electricity.
